# EUROPEAN PATENT SPECIFICATION

(11) **EP 3 075 043 B1**
(45) Date of publication and mention of the grant of the patent: **20.12.2017**
(21) Application number: 14796779.8
(22) Date of filing: 13.11.2014
(51) Int. Cl.: H02B 1/36, H02B 11/127, H02B 11/133, H01H 9/20

(54) **WITHDRAWABLE UNIT FOR DISCONNECTION OF A CONTACT MODULE WITH AN ELECTRICAL CONTACT**
ENTNEHMBARE EINHEIT ZUR ABSCHALTUNG EINES KONTAKTMODULS AN EINEM ELEKTRISCHEN KONTAKT
UNITÉ RÉTRACTABLE POUR LA DÉCONNEXION D'UN MODULE DE CONTACT POURVU D'UN CONTACT ÉLECTRIQUE

(30) Priority: 27.11.2013 GB 201320934
(43) Date of publication of application: 05.10.2016
(73) Proprietor: Eaton Industries (Netherlands) B.V., 7559 SC Hengelo (NL)
(72) Inventor: LIE, Tim, NL-7417 ZB Deventer (NL); CECCHI, Angelo, Hampshire, Southampton SO15 5DY (GB); WANG, Hongbin, Novi, Michigan 48375 (US); EVERINK, Sjaak, NL-7623 CN Borne, Overijssel (NL); GEELEN, Martin, 49828 Lage (DE); D´AMICO, Paolo, NL-7622 NC Borne (NL); KNOL, Bert, NL-7556 GZ Hengelo (NL); POSTMUS, Albert, NL-7471TG Goor (NL); CHEADLE, Ross, Wixom, Michigan 48393 (US)
(74) Representative: Eaton IP Group EMEA
(86) International application number: PCT/EP2014/074544
(87) International publication number: WO 2015/078703

(56) References cited:
- JP-A- H0 746 724
- US-A- 2 624 214
- US-A- 2 921 998
- US-A1- 2013 248 341

## Description

The invention relates to a disconnection device comprising a contact module with an electrical contact. Such a disconnection device may be used for disconnecting low voltage circuits.

In low voltage switch distribution system switchgear is placed in a disconnection device. The device is a withdrawable unit in the form of a drawer that can be inserted into a rack that is placed in a housing. The device comprises a set of main electrical contacts and a set of auxiliary electrical contacts. Both sets are placed on a back side of the device. The main electrical contacts are for making contact to vertically arranged pairs of distribution bus bars in the rack. The auxiliary electrical contacts are for making contact to cables of an auxiliary circuit.

The device provides for a number of connection states which are selected by a main disconnect switch and by partially or completely withdrawing the device from the rack. The states are indicated in the following table.

| State | unit | Main disconnect | Main electrical contacts | Auxiliary electrical contacts | Test button light |
|---|---|---|---|---|---|
| Connected on | Inserted | Closed | Connected | Connected | Off |
| Connected off | Inserted | Open | Connected | Connected | Off |
| Test | Withdrawn 30 mm | Open | Disconnected | Connected | Illuminated |
| Disconnected | Withdrawn 45 mm | Open | Disconnected | Disconnected | Off |
| Removed | Removed from the rack | - | - | - | - |

The device is arranged such that a change of state can only be to one or two of the other states corresponding to moving up or down a row in the table. This is arranged for safety reasons.

However, there is a risk that a drawer may be accidentally closed or that it may change from the position in which it is withdrawn by 45 mm to a position in which it is withdrawn by only 30 mm. Such an accidental closure or change of position may for instance occur when someone or something falls against the drawer or leans against it. Such an accidental change in position corresponds to a change in the state and therefore is dangerous. For instance, in case of a change from being withdrawn by 45 mm to 30 mm, the auxiliary circuit is either connected or disconnected Japanese patent document JP H07 46724 A discloses a disconnection device for a withdrawable unit comprising: a contact module with an electrical contact; wherein a shaft is arranged to rotate around a rotation axis; a slider is arranged to be driven by the shaft in a direction parallel to the rotation axis by the rotation of the shaft, a member comprises a slot comprising a first edge and a second edge facing the first edge, the angles between the first edge and the rotation axis and the contacting direction and the angles between the second edge and the rotation axis and the contacting direction having values larger than zero, such that driving of the shaft results in pushing the member parallel to the contacting direction. The slider is arranged to engage with at least one of the first edge and the second edge while being driven in the direction parallel to the rotation axis. It is an object of the invention to provide a disconnection device that at least partially reduces or obviates this problem. The invention provides a disconnection device according to claim 1. In a first embodiment according to the invention, there is provided, among other features, a disconnection device comprising
- a contact module with an electrical contact; characterized by
- a shaft arranged to rotate around a rotation axis;
- a member, wherein the contact module is fastened to the member,
   the member being arranged to be moveable parallel to a contacting direction for connecting and disconnecting the electrical contact,
   the member comprising a slot comprising a first edge and a second edge facing the first edge, the angles between the first edge and the rotation axis and the contacting direction and the angles between the second edge and the rotation axis and the contacting direction having values larger than zero;
- a slider arranged to be driven in a direction parallel to the rotation axis by the rotation of the shaft, wherein the slider is arranged to engage with at least one of the first edge and the second edge while being driven in the direction parallel to the rotation axis.

Because the slider is arranged to engage with the first edge and the second edge while the slider itself is driven, the member can be pushed by driving the slider. The skilled person will appreciate that the slider acts as a linear actuator for translating rotational motion to linear motion. The slider may for instance be of the travelling nut type or of the ball screw type.

Because the first edge and the second edge are at not parallel to the connection direction, pushing against the member with the slider results in pushing the member parallel to the connection direction. This is the effect of driving the slider in the direction parallel to the rotation axis. By pushing the member parallel to the connection direction, the member will move parallel to the connection direction as the member is moveable parallel to the connection direction. As the member, driven by the slider and thus by the rotation of the shaft moves parallel to the contacting direction, the electrical contact comprised by the module may connect or disconnect. The angles being larger than zero, rotation of the shaft around the rotation axis therefore is used to connect or disconnect the electrical contact linearly in a direction at an angle to the rotation axis.

In an advantageous embodiment, the first edge and the second edge are parallel.

In a second embodiment according to the invention there is provided a disconnection device according to the first embodiment, wherein the first edge and the second edge are in an active part of the slot, the slot comprising an inactive part comprising a third edge and parallel to the rotation axis and a forth edge parallel to the rotation axis and facing the third edge, wherein the inactive part is arranged to correspond to a first set of positions of the slider in the direction parallel to the rotation axis and the active part is arranged to correspond to a second set of positions of the slider, wherein the first set and the second set differ.

Because the third edge and forth edge are parallel to the rotation axis, the slider will not move the member when in the inactive part. As the slot comprises both the active and the inactive part the slider may move from the inactive part to the active part or back. As the first set and the second set differ, i.e. comprise unique locations, it depends on the position of the slider whether a rotation of the shaft and thus a movement of the slider corresponds to a movement of the member.

In an advantageous embodiment, the third edge and the forth edge are parallel. According to the invention there is provided also:
- an auxiliary contact module with an auxiliary electrical contact;
- an auxiliary member, wherein the auxiliary contact module is fastened to the auxiliary member;
   the auxiliary member being arranged to be moveable parallel to the contacting direction for connecting or disconnecting the auxiliary electrical contact;
   the auxiliary member comprising an auxiliary slot comprising a auxiliary first edge and an auxiliary second edge facing the auxiliary first edge, both the auxiliary first edge and the auxiliary second edge having angles to both the rotation axis and the contacting direction with values larger than zero; and
- an auxiliary slider arranged to be driven in a direction parallel to the rotation axis by the rotation of the shaft, wherein the auxiliary slider is arranged to engage with at least one of the auxiliary first edge and the auxiliary second edge while being driven in the direction parallel to the rotation axis.

The auxiliary arrangement is similar to the arrangement of the first or second embodiment. Rotation of the shaft controls the connection of the auxiliary electrical contact in the auxiliary contact module by driving the auxiliary slider. Because the slider and the auxiliary slider are both driveable by rotation of the same shaft, the rotation of a single shaft suffices to drive both the contact and the auxiliary electrical contact. This is advantageous as a minimum number of part is needed so that less space is needed and so that the risk of malfunctions is minimal.

In an advantageous embodiment, the auxiliary first edge and the auxiliary second edge are parallel.

In a third embodiment according to the invention, there is provided a disconnection device according to the previous embodiments, wherein the auxiliary first edge and the auxiliary second edge are in an active part of the auxiliary slot,
the auxiliary slot comprising an auxiliary inactive part comprising an auxiliary third edge and parallel to the rotation axis and an auxiliary forth edge parallel to the rotation axis and facing the auxiliary third edge, wherein the auxiliary inactive part is arranged to correspond to an auxiliary first set of positions of the auxiliary slider in the direction parallel to the rotation axis and the auxiliary active part is arranged to correspond to an auxiliary second set of positions of the auxiliary slider, wherein the auxiliary first set and the auxiliary second set differ and wherein the auxiliary first set of positions of the auxiliary slider corresponds to the second set of positions of the slider.

By itself, the arrangement of the auxiliary member, the auxiliary slot and auxiliary slider (and auxiliary contact module with auxiliary electrical contact) has similar advantages as the arrangement of the member, slot and slider of the second embodiment.
Because the slider and the auxiliary slider are both driven by the rotation of the shaft simultaneously and in addition the auxiliary first set of positions of the auxiliary slider corresponds to the second set of positions of the slider, the contact and the auxiliary electrical contact connect and disconnect in a specific order on rotation of the shaft. For instance, where the slider is in the active part of the slot and the auxiliary slider is in the inactive part of the auxiliary slot, the contact may be disconnected while the auxiliary electrical contact remains connected or disconnected.

In an advantageous embodiment the auxiliary third edge and the auxiliary forth edge are parallel.

In a fourth embodiment according to the invention, there is provided a disconnection device according to the third embodiment,
wherein the auxiliary second set of positions of the auxiliary slider corresponds to the first set of positions of the slider; and
wherein the first set of positions corresponds to a disconnected state of the contact and at least one position of the auxiliary second set of positions corresponds to a connected state of the auxiliary electrical contact; and
wherein the auxiliary first set op positions corresponds to a connected state of the auxiliary electrical contact and at least one position of the second set of positions corresponds to a connected state of the contact.

With the arrangement according to the fourth embodiment, a switching order is arranged wherein first the contact disconnects while the auxiliary electrical contact remains connected and then the auxiliary electrical contact disconnects while the contact remains disconnected. The reverse switching order is obtained when inverting the direction of rotation of the shaft.

In a fifth embodiment of the invention, a disconnection device according to the third, or fourth fifth embodiment is provided, wherein the angle of the first edge with the rotation axis, the angle of the first edge with the contacting direction and the second set of positions are arranged to correspond to a travelling distance of the member; and wherein the angle of the auxiliary first edge, the angle of the auxiliary first edge and the auxiliary second set of positions are arranged to correspond to a auxiliary travelling distance of the auxiliary member; the travelling distance being larger than the auxiliary travelling distance.

The combination of the angle of the first edge with the rotation axis, the angle of the first edge with the contacting direction and the range of positions of the second set of positions, determines the travelling distance of the member while the slider passes the second set op positions.

The combination of the angle of the auxiliary first edge with the rotation axis, the angle of the auxiliary first edge with the contacting direction and the range of positions of the auxiliary second set of positions, determines the travelling distance of the auxiliary member while the auxiliary slider passes the auxiliary second set op positions.

Having an auxiliary travelling distance that is larger than the travelling distance, may be desirable for safety considerations.

In a sixth embodiment of the invention, there is provided a disconnection device according to any of the preceding embodiments, wherein the slider is arranged to engage with an additional slot of an additional member such that the additional member moves between an extended and a retracted position for connecting and disconnecting an additional electrical contact.

With the additional member being arranged to retract and extend an additional electrical contact, the disconnection device can be used to move more contacts between a connected and a disconnected position with a mimimum of parts, here the electrical contact and the additional electrical contact. Using a minimum number of parts is advantageous as this is provides for an efficient use of available space and as as a low number of parts minimizes the risk of malfunctions is minimal.

In an advantageous embodiment, the additional slot is arranged such that the additonal member moves simultaneously with the member. This is advantageous in case a number of contacts need to be moved simulteneously for instance for providing a redundant connection. In an advantageous embodiment, the additonal member and the member move simultaenously in the same direction. This is advantageous for extending and retracting the contact and a additional contact against a bus bar. Simultaneous disconnection may improve the safety.

In a seventh embodiment of the invention, there is provided a disconnection device according to any of the preceding embodiments, comprising
a further contact module comprising a further contact, wherein the member is arranged move the further module together with the contact module for connecting or disconnecting the further contact.
It is advantageous to be able to move a further module with a further contact together with the contact module in that one shaft can now be use to connect separate circuits.

In an eight embodiment of the invention, a disconnection device according to any of the preceding embodiments is provided, comprising a spindle connected to the shaft with a gear and rotation means for driving the spindle.

Because the shaft is connected to a spindle with a gear, the spindle may have a different axis of rotation than the shaft. This means that for instance the connection direction can be perpendicular to the rotation axis of the shaft and with the spindle perpendicular to the shaft, parallel to the spindle. This means that the spindle may be rotated with a knob or handle from a side of the disconnection device with the contact and as the case may be the auxiliary electrical contact moving to and from that side.

In addition, the gear provides freedom to design by which distance the member will travel when rotating the spindle.

In a ninth embodiment of the invention, a disconnection device according to the fourth and eight embodiments is provided, wherein the disconnection device is arranged to switch between the connected state of both the contact and the auxiliary electrical contact and the disconnected state of both the contact and the auxiliary electrical contact within a rotation of the spindle with less than 360 degrees.

This embodiment allows that all states are obtained within less than one full rotation of the spindle. This in turn means that the orientation of the rotation means can be used to determine the connection state of the contact and the auxiliary electrical contact. This arranged by the choice of a ration in the gear and the lead of the thread of the shaft as well as the angle of the edges to the rotation axis and the contacting direction.

In a tenth embodiment of the invention, a disconnection device according to ninth or tenth embodiment, is for use in a housing for switching gear and comprises rotation means on a first side of the disconnection device for rotating the spindle, and the member is arranged to connect the contact with a conductor at a second side of the disconnection device opposite to the first side.

As the conductor in use is at a side opposite to where the user is operating the rotation means, the disconnection device may be operated safely.

Preferably, the disconnection device of the above embodiments is for switching low voltage circuits.

Examples of embodiments the invention will now be described with reference to the accompanying schematic drawings. Corresponding reference symbols in the schematic drawings indicate corresponding parts. The schematic drawings are not necessarily to scale and certain features may be exaggerated to better illustrate and explain the present invention. Further, the examples are not intended to be exhaustive or otherwise limit or restrict the invention to the precise configurations shown in the drawings and disclosed in the following detailed description.
Figure 1 part of the disconnection device according to the invention in the disconnected state
Figure 2 disconnection device according to the invention in the connected on or connected off state
Figure 3 disconnection device according to the invention in between the disconnected state and the test state

### General arrangement and main arrangement

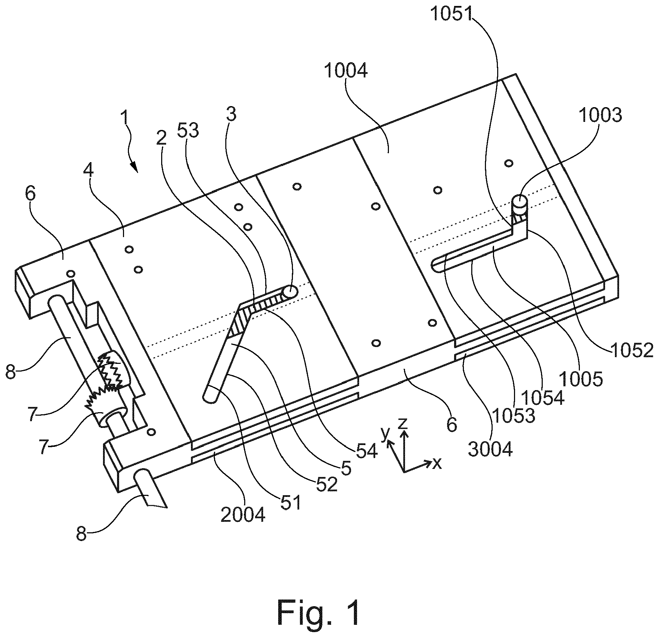

In an example of the invention, a disconnection device (1) according to the invention comprises a shaft (2) (figure 1) which extends in a x-direction. In this example, the x,y and z-directions are perpendicular. The shaft (2) is arranged to rotate around a rotation axis extending in the x-direction. Some elements of the disconnection device (1) are not shown in figure 1 for clarity. The shaft comprises a screw-thread. A slider (3) of the travelling nut type is mounted on the shaft (2) and comprises a screw-thread as well. The screw-thread of the slider (3) engages with the screw-thread of the shaft (2).

The disconnection device (1) also comprises a member (4) having the shape of a plate, with a slot (5). The slider (3) protrudes through the slot (5) with a protrusion with a cylindrical shape. The cross section of the protrusion perpendicular to the z-direction is circular and has a diameter D. The member (4) is mounted in a recess of a frame (6). The member (4) is mounted such that it can slide through the recess in the y-direction.

The slot comprises a first edge (51), a second edge (52), a third edge (53) and a forth edge (54). The first edge is parallel to the second edge. The third edge is parallel to the forth edge. The distance between the first edge (51) and the second edge (52) in y-direction corresponds to the diameter D of the protrusion. Similarly the distance between the third edge (53) and the forth edge (54) in y-direction corresponds to the dimension D. Therefore the edges of the slot engage with the protrusion.

The first edge (51), and thus the second edge (52), is at an angle of 45 degrees with the x-direction as well as 45 degrees with the y-direction.

The third edge (53), and thus the forth edge (54), is parallel to the x-direction and thus perpendicular to the y-direction.

The shaft (2) is connected by two gear wheels (7) to a spindle (8). A knob is mounted on an end of the spindle (8) such that a user may rotate the spindle and thereby the shaft (2).

The disconnection device (1) also comprises a contact module (10) with four contacts (11) that are isolated from each other by walls. The contact module is mounted on the member (4), in this example with screws. The contact module is not shown in figure 1 for clearity.

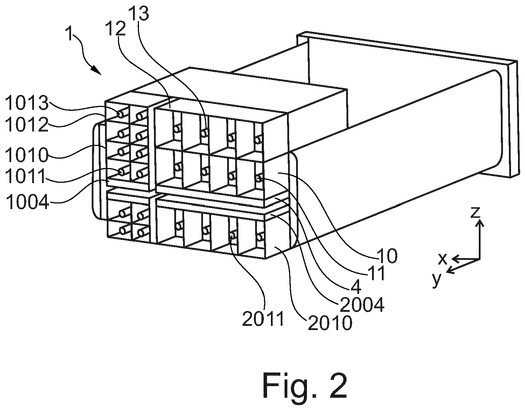

The slot (5) is arranged such that when the slider (3) is in between the third edge (53) and the forth edge (54), the member (4) does not stick out of the frame (6). When the slider (3) is in between the first edge (51) and the second edge (52), the member (4) sticks out of the frame on the side of the contact module (10). This is shown in figure 2.

Fixed to the contact module (10) there is a further contact module (12) thereby forming a stack comprising the member (4), the contact module (10) and the further contact module (12). The further contact module (12) is similar to the contact module (10) and comprises four further contacts (13) that are isolated from each other and the four contacts (11) by walls.

The disconnection device (1) further comprises an additional member (2004). The additional member (2004) is a retractable plate. The additional member (2004) comprises an additional slot. The shape of the additional slot is determined by the projection in z-direction of the slot (5) of the member (4) on the additional member (2004). The slider (3) protrudes through the additional slot with an additional protrusion. The additional protrusion has a cylindrical shape and the cross section of the additional protrusion perpendicular to the z-direction is circular and has a diameter D. As further the shape of the additional slot is determined by projection in z-direction and the slider (3) moves along the x-direction in the x-y plane, the slider (3) engages with the edges of the additional slot simultaneously with the engaging with the edges of the slot (5). The additonal member (2004) is retractable in the y-direction and is driven simultaneously with the member (4).

An additional contact module is fixed to the additional member (2004), in this case by screws. The additional contact module comprises four additional electrical contacts each separately isolated from each other and from the four contacts (1011) by walls.

### Auxiliary arrangement

The disconnection device (1) further comprises an auxiliary slider (1003) mounted on the shaft (2). The auxiliary slider (1003) comprises an inner screw-tread that engages with the screw-thread of the shaft (2).

The disconnection device (1) also comprises an auxiliary member (1004) with an auxiliary slot (1005). The auxiliary member (1004) is shaped as a plate. The auxiliary slider (1003) protrudes through the slot (1005) with an auxiliary protrusion with a cylindrical shape. The cross section of the auxiliary protrusion perpendicular to the z-direction is circular and has a diameter D, in this example equal to the diameter of the cross section of the protrusion. The auxiliary member (1004) is mounted in an auxiliary recess of the frame (6). The auxiliary member (1004) is mounted such that it can slide through the auxiliary recess in the y-direction.

The slot comprises an auxiliary first edge (1051), an auxiliary second edge (1052), an auxiliary third edge (1053) and an auxiliary forth edge (1054). The auxiliary first edge (1051) is parallel to the auxiliary second edge (1052). The auxiliary third edge (1053) is parallel to the auxiliary forth edge (1054). The distance between the auxiliary first edge (1051) and the auxiliary second edge (1052) in y-direction corresponds to the diameter D of the auxiliary protrusion. Similarly the distance between the auxiliary third edge (53) and the auxiliary forth edge (54) in y-direction corresponds to the dimension D. Therefore the edges of the auxiliary slot (1005) engage with the auxiliary protrusion.

The auxiliary first edge (51), and thus the auxiliary second edge (52), is at an angle of 45 degrees with the x-direction as well as 45 degrees with the y-direction.

The auxiliary third edge (53), and thus the auxiliary forth edge (54), is parallel to the x-direction and thus perpendicular to the y-direction.

The disconnection device (1) also comprises an auxiliary contact module (1010) with four auxiliary electrical contacts (1011) that are isolated from each other by walls. The auxiliary contact module (1010) is mounted on the auxiliary member (1004) with screws. The auxiliary contact module (1010) is not shown in figure 1 for clarity. The auxiliary slot (1005) is arranged such that when the auxiliary slider (1003) is in between the auxiliary third edge (1053) and the auxiliary forth edge (1054), the auxiliary member (1004) does not stick out of the frame (6). When the auxiliary slider (1003) is in between the auxiliary first edge (1051) and the auxiliary second edge (1052), the auxiliary member (4) sticks out of the frame on the side of the auxiliary contact module (1010). This is shown in figure 2.

Fixed to the auxiliary contact module (1010) there is a further auxiliary contact module (1012) thereby forming a stack comprising the auxiliary member (1004), the auxiliary contact module (10) and the further auxiliary contact module (12). The further auxiliary contact module (1012) is similar to the auxiliary contact module (1010) and comprises four further auxiliary electrical contacts (1013) that are isolated from each other, the additional electrical contacts and the four auxiliary electrical contacts (1011) by walls.

Each of the four contacts (11) is connected with one of the four auxiliary electrical contacts (1011) via a main disconnect switch.

In a way similar to the additional member (2004), the disconnection device comprises an additional auxiliary member (3004). The additional auxiliary member (3004) is a retractable plate. The additional auxiliary member (3004) comprises an additional auxiliary slot. The shape of the additional auxialiry slot is determined by the projection in z-direction of the auxiliary slot (1005) of the auxiliary member (1004) on the additional auxiliary member (3004). The auxiliary slider (1003) protrudes through the additional auxiliary slot with an additional auxiliary protrusion. The additional auxiliary protrusion has a cylindrical shape and the cross section of the additional auxiliary protrusion perpendicular to the z-direction is circular and has a diameter D. As further the shape of the additional auxialiry slot is determined by projection in z-direction and the auxialiry slider (1003) moves along the x-direction in the x-y plane, the auxiliary slider (1003) engages with the edges of the additional auxiliary slot simultaneously with the engaging with the edges of the auxiliary slot (1005). The additonal auxiliary member (3004) is retractable in the y-direction and is driven simulataneously with the auxiliary member (1004).

An additional auxiliary contact module is fixed to the additional auxiliary member (3004), in this case by screws. The additional auxiliary contact module comprises four additional auxiliary electrical contacts each separatly isolated from each other and from other electrical contacts such as the four electrical contacts (1011) by walls.

### Use

In an example of the use of the disconnection device (1) of the example described above, the disconnection device (1) is build into a housing. The housing is formed by a drawer. The housing is placed in a cabinet for switchgear in a low voltage distribution system. Rotation means (for instance a dial) are placed at a front side of the housing and the electrical contacts (11) and the auxiliary electrical contacts (1011) are inside the housing near bus bars of a supply circuit and electrical wires of an auxiliary circuit respectively. The main disconnect switch is also operable from the front side of the housing. The main disconnect switch is arranged such that a single rotation of a turn button on the front side of the housing connects or disconnects the electrical contacts (11) from the auxiliary contacts (1011).

There is a mechanical safety system that requires that the main disconnect switch is in a state wherein the connections between the four cables and the four further cables are broken before the member (4) or the auxiliary member (1004) can be extended or retracted. This ensures that the extending and retracting actions are offline which prevents arcs. The mechanical safety system is comprised in the housing and engages with the cabinet.

When operating the disconnection device (1) for retracting or extending the four electrical contacts (11) (together with the four further contacts and the four additional electrical contacts) or the four auxiliary electrical contacts (1011) (together with the four further auxiliary electrical contacts and the four additional auxiliary electrical ontacts), the spindle (8) is rotably driven by rotation means (not shown). The rotation of the spindle (8) is transmitted to the shaft (2) by the two gear wheels (7). Because of the screw-threads the slider (3) moves in x-direction. For instance the slider (3) may move from the part of the slot (5) between the third edge (53) and the forth edge (54) to the part of the slot (5) between the first edge (51) and the second edge (52). While travelling in the part of the slot (5) between the third edge (53) and the forth edge (54), the member (4) does not move in the y-direction. Therefore this part is referred to as inactive part. While travelling in the part of the slot (5) between the first edge (51) and the second edge (52), the member (4) moves in the y-direction. The member (4) moves in the positive y-direction when the slider (3) moves in negative x-direction and in the negative y-direction when the slider (3) moves in the positive x-direction.

Similarly the auxiliary member (1004) does not move when the auxiliary slider (1003) is between the auxiliary third edge (1053) and the auxiliary forth edge (1054), where as it moves in the y-direction when the auxiliary slider is between the auxiliary first edge (1051) and the auxiliary second edge (1052). The part of the auxiliary slot (1005) between the auxiliary first edge (1051) and the auxiliary second edge (1052) is the auxiliary active part and the part between the auxiliary third edge (1053) and the auxiliary forth edge (1054) is an auxiliary inactive part.

The disconnection device (1) is arranged such that when the slider (3) is in the inactive part, the auxiliary slider (1003) is in the auxiliary active part. In addition, the slider (3) reaches the ends of the inactive part simultaneously with the auxiliary slider (1003) reaching the ends of the auxiliary active part. In other words, the positions of the slider (3) in the x-direction when in the inactive part correspond to the positions of the auxiliary slider (1003) in the x-direction when in the auxiliary active part. As the slider and the auxiliary slider are fitted on the shaft (2) their respective y- and z-positions do not change.
Also, when the slider (3) is in the active part, the auxiliary slider (1003) is in the auxiliary inactive part. Furthermore, the slider (3) reaches the end points of the inactive part at the same time as the auxiliary slider (1003) reaches the end points of the auxiliary active part. In other words, the positions of the slider (3) in the x-direction when in the active part correspond to the positions of the auxiliary slider (1003) in the x-direction when in the auxiliary inactive part.

While the slider (3) travels in the active part in negative x-direction, the four contacts (11) reach positions in y-direction where they make contact to a bus bar. Similarly, while the auxiliary slider (1003) travels in the auxiliary active part in negative x-direction the auxiliary electrical contacts (1011) reach positions in y-direction where they make contact to electrical wires of an auxiliary circuit. Therefore the y-direction may also be referred to as a contacting direction.

The auxiliary active part is shorter than the active part. In addition, tha edges of the auxilairy active part (the auxiliary first edge (51) and the auxiliary second edge (52)) and of the active part (the first edge (51) and the second edge (52)) are all at an angle of 45 degrees with the y-direction. Therefore the auxiliary member moves less in y-direction when the auxiliary slider (1003) moves from one end of the auxiliary slot (1005) to the other than the member (5) when the slider (3) moves from one end of the slot (5) to the other.

The connection device comprises a first state wherein the slider (3) has reached the end of the slot (5) travelling in positive x-direction and the auxiliary slider (1003) has reached the end of the auxiliary slot (1005) travelling in positive x-direction. This corresponds to a disconnected state. Figure 1 corresponds to the disconnected state.

The state of the disconnection device wherein the auxiliary member (1004) has been maximally extended in the positive y-direction while the member (4) still is maximally retracted, corresponds to a test state.

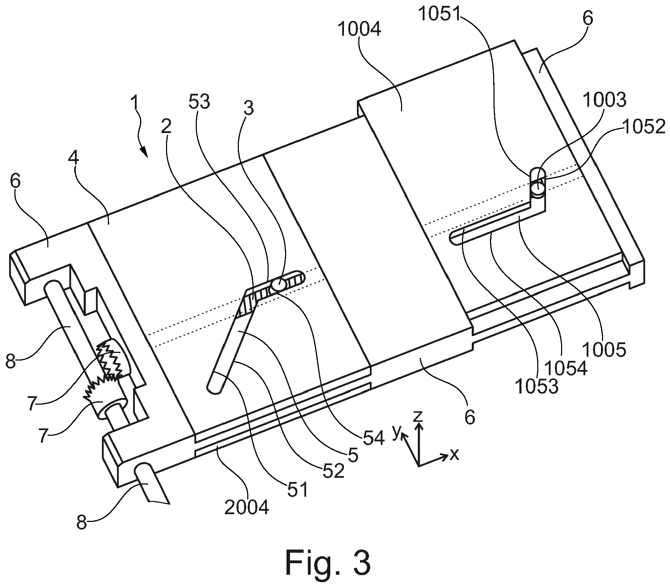

Figure 3 shows the disconnection device in between the disconnected state and the test state.

The state of the disconnection device wherein both the auxiliary member (1004) and the member (4) have been maximally extended in the positive y-direction corresponds to a connected off state and a connected on state. The difference between the connected off state and the connected on state is the switching state of the main disconnect switch. In the connected on state, the main disconnect switch is closed, i.e. the electrical contacts (11) are connected to the auxiliary contacts (1011). In all other states of the disconnection device, the main disconnect switch is open, i.e. the electrical contacts (11) are not connected internally to the auxiliary contacts (1011). Figure 2 corresponds to the connected on or connected off state (the state of the main disconnect switch is not shown).

The lead of the shaft (2), the gear ratio and the angle of the first edge (51) and the auxiliary first edge (1051) are such that the dial can be rotated only by 270 degrees before the slider (3) reaches one of the two ends of the slot (5).

## Claims

1. Disconnection device (1) for a withdrawable unit comprising
- a contact module (10) with an electrical contact (11);
- a shaft (2) arranged to rotate around a rotation axis;
- a member (4), wherein the contact module is fastened to the member,
the member being arranged to be moveable parallel to a contacting direction for connecting and disconnecting the electrical contact,
- a slider (3) arranged to be driven by the shaft in a direction parallel to the rotation axis by the rotation of the shaft,
the member comprising a slot (5) comprising a first edge (51) and a second edge (52) facing the first edge, the angles between the first edge and the rotation axis and the contacting direction and the angles between the second edge and the rotation axis and the contacting direction having values larger than zero, such that driving of the shaft results in pushing the member parallel to the contacting direction; and
wherein the slider is arranged to engage with at least one of the first edge and the second edge while being driven in the direction parallel to the rotation axis,
the disconnection device further comprising:
- an auxiliary contact module (1010) with an auxiliary electrical contact (1011);
- an auxiliary member (1004), wherein the auxiliary contact module is fastened to the auxiliary member,
the auxiliary member being arranged to be moveable parallel to the contacting direction for connecting or disconnecting the auxiliary electrical contact,
the auxiliary member comprising an auxiliary slot (1005) comprising a auxiliary first edge (1051) and an auxiliary second edge (1052) facing the auxiliary first edge, both the auxiliary first edge and the auxiliary second edge having angles to both the rotation axis and the contacting direction with values larger than zero, such that driving of the shaft results in pushing the auxiliary member parallel to the contacting direction; and
- an auxiliary slider (1003) arranged to be driven by the shaft in a direction parallel to the rotation axis by the rotation of the shaft, wherein the auxiliary slider is arranged to engage with at least one of the auxiliary first edge and the auxiliary second edge while being driven in the direction parallel to the rotation axis.

2. Disconnection device (1) according to claim 1, wherein the first edge and the second edge are in an active part of the slot, the slot comprising an inactive part comprising a third edge (53) parallel to the rotation axis and a forth edge (54) parallel to the rotation axis and facing the third edge, wherein the inactive part is arranged to correspond to a first set of positions of the slider in the direction parallel to the rotation axis and the active part is arranged to correspond to a second set of positions of the slider, wherein the first set and the second set differ.

3. Disconnection device (1) according to claims 1 and 2, wherein the auxiliary first edge and the auxiliary second edge are in an active part of the auxiliary slot,
the auxiliary slot comprising an auxiliary inactive part comprising an auxiliary third edge (1053) parallel to the rotation axis and an auxiliary forth edge (1054) parallel to the rotation axis and facing the auxiliary third edge, wherein the auxiliary inactive part is arranged to correspond to an auxiliary first set of positions of the auxiliary slider in the direction parallel to the rotation axis and the auxiliary active part is arranged to correspond to an auxiliary second set of positions of the auxiliary slider, wherein the auxiliary first set and the auxiliary second set differ and wherein the auxiliary first set of positions of the auxiliary slider corresponds to the second set of positions of the slider.

4. Disconnection device (1) according to claim 3,
wherein the auxiliary second set of positions of the auxiliary slider corresponds to the first set of positions of the slider; and
wherein the first set of positions corresponds to a disconnected state of the contact and at least one position of the auxiliary second set of positions corresponds to a connected state of the auxiliary electrical contact; and
wherein the auxiliary first set of positions corresponds to a connected state of the auxiliary electrical contact and at least one position of the second set of positions corresponds to a connected state of the contact in order to arrive at a switching order between the contact and the auxiliary contact.

5. Disconnection device (1) according to claim 1, 3 or 4, wherein the angle of the first edge (51) with the rotation axis, the angle of the first edge with the contacting direction and the second set of positions are arranged to correspond to a travelling distance of the member (4); and wherein the angle of the auxiliary first edge (1051), the angle of the auxiliary first edge and the auxiliary second set of positions are arranged to correspond to a auxiliary travelling distance of the auxiliary member (1004); the travelling distance being larger than the auxiliary travelling distance.

6. Disconnection device (1) according to any of the preceding claims, wherein the slider is arranged to engage with an additional slot of an additional member (2004) such that the additional member moves between an extended and a retracted position for connecting and disconnecting an additional electrical contact.

7. Disconnection device (1) according to any of the preceding claims, comprising
a further contact module (12) comprising a further contact (13), wherein the member (4) is arranged move the further module together with the contact module (10) for connecting or disconnecting the further contact.

8. Disconnection device (1) according to any of the preceding claims, comprising a spindle (8) connected to the shaft with a gear (7) and rotation means for driving the spindle.

9. Disconnection device (1) according to claims 4 and 8, wherein the disconnection device is arranged to switch between the connected state of both the contact and the auxiliary electrical contact and the disconnected state of both the contact and the auxiliary electrical contact within a rotation of the spindle with less than 360 degrees.

10. Disconnection device (1) according to claim 8 or 9 and suitable for use in a housing for switching gear comprising rotation means on a first side of the disconnection device for rotating the spindle, wherein the member (4) is arranged to connect the contact (11) with a conductor at a second side of the disconnection device opposite to the first side.

## Patentansprüche

1. Trennvorrichtung (1) für eine herausziehbare Einheit, umfassend
- ein Kontaktmodul (10) mit einem elektrischen Kontakt (11);
- eine Welle (2), die angeordnet ist, um sich um eine Drehachse zu drehen;
- ein Element (4), wobei das Kontaktmodul an dem Element befestigt ist,
wobei das Element angeordnet ist, um parallel zu einer Kontaktierungsrichtung zum Verbinden und Trennen des elektrischen Kontakts bewegbar zu sein,
- einen Schieber (3), der angeordnet ist, um von der Welle in einer Richtung parallel zu der Drehsachse der Welle angetrieben zu werden,
wobei das Element einen Schlitz (5) umfasst, der eine erste Kante (51) und eine zweite Kante (52), die der ersten Kante zugewandt ist, umfasst, wobei die Winkel zwischen der ersten Kante und der Drehachse und der Kontaktierungsrichtung und die Winkel zwischen der zweiten Kante und der Drehachse und der Kontaktierungsrichtung Werte aufweisen, die größer als Null sind, sodass ein Antreiben der Welle dazu führt, dass das Element parallel zu der Kontaktierungsrichtung geschoben wird; und
wobei der Schieber zum Eingriff mit zumindest einer von der ersten Kante und der zweiten Kante angeordnet ist, während er in die Richtung parallel zu der Drehachse angetrieben wird,
wobei die Trennvorrichtung weiter umfasst:
- ein Hilfskontaktmodul (1010) mit einem elektrischen Hilfskontakt (1011);
- ein Hilfselement (1004), wobei das Hilfskontaktmodul an dem Hilfselement befestigt ist,
wobei das Hilfselement angeordnet ist, um parallel zu der Kontaktierungsrichtung zum Verbinden und Trennen des elektrischen Hilfskontakts bewegbar zu sein,
wobei das Hilfselement einen Hilfsschlitz (1005) umfasst, der eine erste Hilfskante (1051) und eine zweite Hilfskante (1052), die der ersten Hilfskante zugewandt ist, umfasst, wobei sowohl die erste Hilfskante als auch die zweite Hilfskante Winkel zu sowohl der Drehachse als auch der Kontaktierungsrichtung aufweisen, deren Werte größer als Null sind, sodass ein Antreiben der Welle dazu führt, dass das Hilfselement parallel zu der Kontaktierungsrichtung geschoben wird; und
- wobei ein Hilfsschieber (1003) angeordnet ist, um von der Welle in einer Richtung parallel zu der Drehachse durch die Drehung der Welle angetrieben zu werden, wobei der Hilfsschieber zum Eingriff mit zumindest einer von der ersten Hilfskante und der zweiten Hilfskante angeordnet ist, während er in die Richtung parallel zu der Drehachse angetrieben wird.

2. Trennvorrichtung (1) nach Anspruch 1, wobei die erste Kante und die zweite Kante sich in einem aktiven Teil des Schlitzes befinden, wobei der Schlitz einen inaktiven Teil umfasst, der eine dritte Kante (53), parallel zu der Drehachse, und eine vierte Kante (54), parallel zu der Drehachse und der dritten Kante zugewandt, umfasst, wobei der inaktive Teil angeordnet ist, um einem ersten Satz von Positionen des Schiebers in der Richtung parallel zu der Drehachse zu entsprechen, und wobei der aktive Teil angeordnet ist, um einem zweiten Satz von Positionen des Schiebers zu entsprechen, wobei der erste Satz und der zweite Satz verschieden sind.

3. Trennvorrichtung (1) nach Ansprüchen 1 und 2, wobei sich die erste Hilfskante und die zweite Hilfskante in einem aktiven Teil des Hilfsschlitzes befinden,
wobei der Hilfsschlitz einen inaktiven Hilfsteil umfasst, der eine dritte Hilfskante (1053), parallel zu der Drehachse, und eine vierte Hilfskante (1054), parallel zu der Drehachse und der dritten Hilfskante zugewandt, umfasst, wobei der inaktive Hilfsteil angeordnet ist, um einem ersten Hilfssatz von Positionen des Hilfsschiebers in der Richtung parallel zu der Drehachse zu entsprechen, und wobei der aktive Hilfsteil angeordnet ist, um einem zweiten Hilfssatz von Positionen des Hilfsschiebers zu entsprechen, wobei der erste Hilfssatz und der zweite Hilfssatz verschieden sind und wobei der erste Hilfssatz von Positionen des Hilfsschiebers dem zweiten Satz von Positionen des Schiebers entspricht.

4. Trennvorrichtung (1) nach Anspruch 3,
wobei der zweite Hilfssatz von Positionen des Hilfsschiebers dem ersten Satz von Positionen des Schiebers entspricht; und
wobei der erste Satz von Positionen einem getrennten Zustand des Kontakts entspricht und zumindest eine Position des zweiten Hilfssatzes von Positionen einem verbundenen Zustand des elektrischen Hilfskontakts entspricht; und
wobei der erste Hilfssatz von Positionen einem verbundenen Zustand des elektrischen Hilfskontakts entspricht und zumindest eine Position des zweiten Satzes von Positionen einem verbundenen Zustand des Kontakts entspricht, um zu einer Schaltfolge zwischen dem Kontakt und dem Hilfskontakt zu gelangen.

5. Trennvorrichtung (1) nach Anspruch 1, 3 oder 4, wobei der Winkel der ersten Kante (51) mit der Drehachse, der Winkel der ersten Kante mit der Kontaktierungsrichtung und der zweite Satz von Positionen angeordnet sind, um einer Bewegungsstrecke des Elements (4) zu entsprechen; und wobei der Winkel der ersten Hilfskante (1051), der Winkel der ersten Hilfskante und der zweite Hilfssatz von Positionen angeordnet sind, um einer Hilfsbewegungsstrecke des Hilfselements (1004) zu entsprechen; wobei die Bewegungsstrecke größer als die Hilfsbewegungsstrecke ist.

6. Trennvorrichtung (1) nach einem der vorstehenden Ansprüche, wobei der Schieber zum Eingriff mit einem zusätzlichen Schlitz eines zusätzlichen Elements (2004) angeordnet ist, sodass das zusätzliche Element sich zwischen einer ausgefahrenen und einer eingefahrenen Position bewegt, zum Verbinden und Trennen eines zusätzlichen elektrischen Kontakts.

7. Trennvorrichtung (1) nach einem der vorstehenden Ansprüche, umfassend
ein weiteres Kontaktmodul (12), das einen weiteren Kontakt (13) umfasst, wobei das Element (4) angeordnet ist, um das weitere Modul zusammen mit dem Kontaktmodul (10) bewegen, zum Verbinden oder Trennen des weiteren Kontakts.

8. Trennvorrichtung (1) nach einem der vorstehenden Ansprüche, umfassend
eine Spindel (8), die mittels einem Getriebe (7) mit der Welle verbunden ist, und Drehmittel zum Antreiben der Spindel.

9. Trennvorrichtung (1) nach Ansprüchen 4 und 8, wobei die Trennvorrichtung angeordnet ist, um zwischen dem verbundenen Zustand von sowohl dem Kontakt als auch dem elektrischen Hilfskontakt und dem getrennten Zustand von sowohl dem Kontakt als auch dem elektrischen Hilfskontakt innerhalb einer Drehung der Spindel von weniger als 360 Grad zu schalten.

10. Trennvorrichtung (1) nach Anspruch 8 oder 9 und geeignet zur Verwendung in einem Gehäuse für ein Schaltgetriebe, das Drehmittel auf einer ersten Seite der Trennvorrichtung zum Drehen der Spindel umfasst, wobei das Element (4) angeordnet ist, um den Kontakt (11) mit einem Leiter an einer zweiten Seite der Trennvorrichtung, gegenüber der ersten Seite, zu verbinden.

## Revendications

1. Dispositif de déconnexion (1) pour une unité rétractable comprenant
- un module de contact (10) avec un contact électrique (11) ;
- un arbre (2) agencé pour tourner autour d'un axe de rotation ;
- un élément (4), dans lequel le module de contact est fixé à l'élément,
l'élément étant agencé pour être mobile parallèlement à une direction de mise en contact pour la connexion et la déconnexion du contact électrique,
- un élément coulissant (3) agencé pour être entraîné par l'arbre dans une direction parallèle à l'axe de rotation par la rotation de l'arbre,
l'élément comprenant une fente (5) comprenant un premier bord (51) et un deuxième bord (52) faisant face au premier bord, les angles entre le premier bord et l'axe de rotation et la direction de mise en contact et les angles entre le deuxième bord et l'axe de rotation et la direction de mise en contact ayant des valeurs supérieures à zéro, de manière que l'entraînement de l'arbre provoque la poussée de l'élément parallèlement à la direction de mise en contact ; et
dans lequel l'élément coulissant est agencé pour être en prise avec au moins un du premier bord et du deuxième bord tout en étant entraîné dans la direction parallèle à l'axe de rotation,
le dispositif de déconnexion comprenant en outre :
- un module de contact auxiliaire (1010) avec un contact électrique auxiliaire (1011);
- un élément auxiliaire (1004), dans lequel le module de contact auxiliaire est fixé à l'élément auxiliaire,
l'élément auxiliaire étant agencé pour être mobile parallèlement à la direction de mise en contact pour la connexion ou la déconnexion du contact électrique auxiliaire,
l'élément auxiliaire comprenant une fente auxiliaire (1005) comprenant un premier bord auxiliaire (1051) et un deuxième bord auxiliaire (1052) faisant face au premier bord auxiliaire, à la fois le premier bord auxiliaire et le deuxième bord auxiliaire formant des angles à la fois par rapport à l'axe de rotation et à la direction de mise en contact avec des valeurs supérieures à zéro, de manière que l'entraînement de l'arbre provoque la poussée de l'élément auxiliaire parallèlement à la direction de mise en contact ; et
- un élément coulissant auxiliaire (1003) agencé pour être entraîné par l'arbre dans une direction parallèle à l'axe de rotation par la rotation de l'arbre, dans lequel l'élément coulissant auxiliaire est agencé pour être en prise avec au moins un du premier bord auxiliaire et du deuxième bord auxiliaire tout en étant entraîné dans la direction parallèle à l'axe de rotation.

2. Dispositif de déconnexion (1) selon la revendication 1, dans lequel le premier bord et le deuxième bord sont dans une partie active de la fente, la fente comprenant une partie inactive comprenant un troisième bord (53) parallèle à l'axe de rotation et un quatrième bord (54) parallèle à l'axe de rotation et faisant face au troisième bord, dans lequel la partie inactive est agencée pour correspondre à un premier ensemble de positions de l'élément coulissant dans la direction parallèle à l'axe de rotation et la partie active est agencée pour correspondre à un deuxième ensemble de positions de l'élément coulissant, dans lequel le premier ensemble et le deuxième ensemble diffèrent.

3. Dispositif de déconnexion (1) selon les revendications 1 et 2, dans lequel le premier bord auxiliaire et le deuxième bord auxiliaire sont dans une partie active de la fente auxiliaire,
la fente auxiliaire comprenant une partie inactive auxiliaire comprenant un troisième bord auxiliaire (1053) parallèle à l'axe de rotation et un quatrième bord auxiliaire (1054) parallèle à l'axe de rotation et faisant face au troisième bord auxiliaire, dans lequel la partie inactive auxiliaire est agencée pour correspondre à un premier ensemble auxiliaire de positions de l'élément coulissant auxiliaire dans la direction parallèle à l'axe de rotation et la partie active auxiliaire est agencée pour correspondre à un deuxième ensemble auxiliaire de positions de l'élément coulissant auxiliaire, dans lequel le premier ensemble auxiliaire et le deuxième ensemble auxiliaire diffèrent et dans lequel le premier ensemble auxiliaire de positions de l'élément coulissant auxiliaire correspond au deuxième ensemble de positions de l'élément coulissant.

4. Dispositif de déconnexion (1) selon la revendication 3,
dans lequel le deuxième ensemble auxiliaire de positions de l'élément coulissant auxiliaire correspond au premier ensemble de positions de l'élément coulissant ; et
dans lequel le premier ensemble de positions correspond à un état déconnecté du contact et au moins une position du deuxième ensemble auxiliaire de positions correspond à un état connecté du contact électrique auxiliaire ; et
dans lequel le premier ensemble auxiliaire de positions correspond à un état connecté du contact électrique auxiliaire et au moins une position du deuxième ensemble de positions correspond à un état connecté du contact de manière à arriver à un ordre de commutation entre le contact et le contact auxiliaire.

5. Dispositif de déconnexion (1) selon la revendication 1, 3 ou 4, dans lequel l'angle du premier bord (51) avec l'axe de rotation, l'angle du premier bord avec la direction de mise en contact et le deuxième ensemble de positions sont agencés pour correspondre à une distance de déplacement de l'élément (4) ; et dans lequel l'angle du premier bord auxiliaire (1051), l'angle du premier bord auxiliaire et le deuxième ensemble auxiliaire de positions sont agencés pour correspondre à une distance de déplacement auxiliaire de l'élément auxiliaire (1004) ; la distance de déplacement étant supérieure à la distance de déplacement auxiliaire.

6. Dispositif de déconnexion (1) selon l'une quelconque des revendications précédentes, dans lequel l'élément coulissant est agencé pour être en prise avec une fente additionnelle d'un élément additionnel (2004) de manière que l'élément additionnel se déplace entre une position étendue et rétractée pour la connexion et la déconnexion d'un contact électrique additionnel.

7. Dispositif de déconnexion (1) selon l'une quelconque des revendications précédentes, comprenant
un autre module de contact (12) comprenant un autre contact (13), dans lequel l'élément (4) est agencé déplacer l'autre module conjointement au module de contact (10) pour la connexion ou la déconnexion de l'autre contact.

8. Dispositif de déconnexion (1) selon l'une quelconque des revendications précédentes, comprenant un axe (8) connecté à l'arbre avec un engrenage (7) et des moyens de rotation pour entraîner l'axe.

9. Dispositif de déconnexion (1) selon les revendications 4 et 8, dans lequel le dispositif de déconnexion est agencé pour commuter entre l'état connecté à la fois du contact et du contact électrique auxiliaire et l'état déconnecté à la fois du contact et du contact électrique auxiliaire durant une rotation de l'axe de moins de 360 degrés.

10. Dispositif de déconnexion (1) selon la revendication 8 ou 9 et adapté pour l'utilisation dans un boîtier pour appareillage de commutation comprenant des moyens de rotation sur un premier côté du dispositif de déconnexion pour la rotation de l'axe, dans lequel l'élément (4) est agencé pour connecter le contact (11) avec un conducteur au niveau d'un deuxième côté du dispositif de déconnexion opposé au premier côté.
